# EUROPEAN PATENT SPECIFICATION

(11) **EP 3 294 049 B1**
(45) Date of publication and mention of the grant of the patent: **17.02.2021**
(21) Application number: 16723648.8
(22) Date of filing: 11.05.2016
(51) Int. Cl.: A01B 69/00

(54) **AN AGRICULTURAL IMPLEMENT FOR USE IN A FIELD COMPRISING PRE-PREPARED TRACKS**
LANDWIRTSCHAFTLICHES ANBAUGERÄT ZUR VERWENDUNG AUF EINEM FELD MIT IM VORAUS PRÄPARIERTEN SPUREN
OUTIL AGRICOLE DESTINÉ À ÊTRE UTILISÉ DANS UN CHAMP COMPRENANT DES PISTES PRÉPARÉES AU PRÉALABLE

(30) Priority: 11.05.2015 DK 201570275
(43) Date of publication of application: 21.03.2018
(73) Proprietor: MSR Technology ApS, 7700 Thisted (DK)
(72) Inventor: STOLBERG-ROHR, Michael, Nors 7700 Thisted (DK)
(74) Representative: AWA Denmark A/S
(86) International application number: PCT/DK2016/050123
(87) International publication number: WO 2016/180422

(56) References cited:
- DE-B- 1 057 373
- US-A- 4 184 551
- US-A- 5 121 799
- US-A- 5 813 472

## Description

The present invention relates to an agricultural implement for use in a field comprising pre-prepared tracks, such as furrows and/or ridges, said implement comprising a tool carrying transverse boom carrying a plurality of field working tools, said boom comprising a coupling device for attachment to a load carrying vehicle, and a track following steering device, said steering device being attached to the boom to be rotatable around a first vertical axis, said steering device comprising a coulter extending in a vertical plane and a steering arm extending parallel to said vertical plane to a front end carrying a track following means.

An agricultural implement of this kind is disclosed in US 5 813 472 A which relates to a guidance system for an agricultural implement and more particularly to a means for mounting a guidance system forwardly of the implement adjacent one end thereof.

In agriculture it is known to prepare a field or bed to include tracks like furrows and/or ridge in order to be able later to work the field or bed in a specific pattern, e.g. in order to weed the field or bed without harming the growing crop. An example is a field prepared by means of an apparatus as disclosed in WO 2006133697 A1 (which claims the priority of DK PA 2005 00850), whereby a crop is grown on top of ridges prepared in a field.

Especially in organic agriculture it is a desire to be able to weed with great precision in order to effectively promote growth of the crop. An example of an effective and precise weeding unit is disclosed in Danish patent application no. PA 2011 00388 filed by the present inventor, now Danish patent No. 178239.

A number of prior art documents relates to steering an agricultural implement to follow a track. Examples are:
DK 83285 discloses a beet digger comprising a mechanism for controlling the position of a single pair of digging coulters. The mechanism is positioned in front of the digging coulters and comprises a pair of runners running on either side of the beet and being connected to a pair of coulter discs steered by the runners. This document does not disclose how the beet digger is connected to a tractor or to other beet diggers.

DK 87088 (which corresponds to DE 1 057 373) discloses a steering apparatus for tractor towed machines and implements. The apparatus comprises a track-making device at the front of a tractor and an implement rear of the tractor comprising a central load carrying wheel steered by a track following wheel or runner following the track made by the track-making devise. The load carrying wheel may be provided with a flange for absorbing lateral forces. The central load carrying wheel is positioned in front of soil working devices of the machine.

US 2 811 089 discloses a steering means for row crop cultivators, comprising a load carrying wheel and a guide shoe assembly comprising a pair of slanted runners or guide shoes for entering and following a furrow to thereby steer the load carrying wheel.

US 4 184 551 discloses a steering device for row crop cultivators, comprising a pair of castor mounted wheels for running in and following a track or furrow and a pair of hydraulically power assisted steerable coulter discs mounted on a frame behind an implement carrying boom of a row crop cultivator.

GB 2 338 635 discloses a three-point lift/hitch suspended apparatus for mechanical weeding or hoeing, comprising a pair of steerable supporting wheels said wheels being controlled hydraulically via a single track or furrow following castor wheel. The steerable supporting wheels appear to be positioned in front of the soil working implements of the apparatus.

The object of the present invention is provide for obtaining greater precision when working in a field comprising pre-prepared tracks, especially when driving through curves and driving in a field with a lateral slope, whereby gravity tends to pull implements and vehicles sideways.

This is obtained by an implement mentioned in the above first paragraph, which is characterized in that at least two such steering devices are attached to said boom, whereby at either end of the boom a steering device is provided.

Hereby is obtained an implement with a mechanical steering device with a very quick response and a firm guidance of the implement providing for the implement to follow closely the course defined by the tracks. Further it is obtained that if the implement tends to diverge from a position perpendicular to the instant course of the track the steering devices will provide lateral tensions tending to keep the implement in the correct position due to the fact that the steering devices are positioned respectively at either end of the boom.

It should be noted that whereas herein the invention is by way of example described as used in connection with weeding units other field working tools may be used such as hoes, cultivators, sowing aggregates, planting aggregates, fertilizing aggregates, etc.

The coupling device is preferably constructed for coupling to a three point hitch, which is an ordinary coupling device on most known tractors.

It should be noted that as used herein agriculture should be understood to comprise horticulture and forestry.

In a preferred embodiment the coulter is a rotatable plane disc coulter. This provides for easy entry of the coulter into the ground and low friction travel through the ground while providing large resistance to lateral forces.

In general it is noted that a coulter, contrary to a load carrying wheel, will not support the implement but penetrate into the ground.

Preferably the coulter is suspended in the steering device to be movable upwards against a spring load. This enables the coulter to ride over an obstacle such as a stone in the ground without lifting the entire implement substantially. Thus the coulter is in an embodiment mounted on a coulter arm rotatable around an axis perpendicular to said vertical plane.

Preferably the steering arm is rotatable around an axis perpendicular to said vertical plane against a spring load. This provides for the track following means to securely remain in contact with the track to follow said track.

In an embodiment the track following means comprises a pair of wheels rotating around mutually slanted axes. Such embodiment is effective for the track following means to follow a furrow whereby either wheel may remain in contact with a respective side of the furrow.

The boom has a longitudinal extent and preferably the steering devices are attached to the boom within the respective outermost third of said longitudinal extent. This ensures that steering devices will affect a vehicle to which the implement is hitched with a great moment to overrule forces arising from such vehicle and tending to remove the implement from its intended route defined by the track.

Thus in an embodiment the steering devices are attached to the boom at the respective end between the two outermost of the field working tools.

Preferably the coulters are aligned with the field working tools. Whereas the boom is transverse, i.e. extends crosswise to the direction of travel during operation, the field working tools will usually have a longitudinal extent in the direction of travel during operation. The coulters being aligned should be understood as the centres of the coulters being positioned in a vertical plane parallel to the boom and situated within the longitudinal extent of the field working tools. When the field working tools are rotatable around respective substantially vertical second axes relative to the boom, the coulters are preferably substantially aligned with such vertical second axes.

In an embodiment the centre of the coulter has a first horizontal distance from the first vertical axis, the track following means has second horizontal distance from the first vertical axis, and the second horizontal distance is more than twice as long as the first horizontal distance. This ensures that the lateral forces acting on the track following means are limited whereby the track following ability of the track following means is enhanced.

In an embodiment the steering arm is constructed for the second horizontal distance to be adjustable. Either the steering arm per se may have an adjustable length or the mounting of the track following means on the arm may be adjustable.

The invention will in the following be described in more detail by way of example of an embodiment having reference to the accompanying schematic drawings, in which:
Fig. 1 is a top view of an implement according to the invention hitched to a tractor during operation;
Fig. 2 is an isometric view of a steering device according to the invention;
Fig. 3 is a left side view of the steering device; and
Fig. 4 is a bottom view of the steering device.

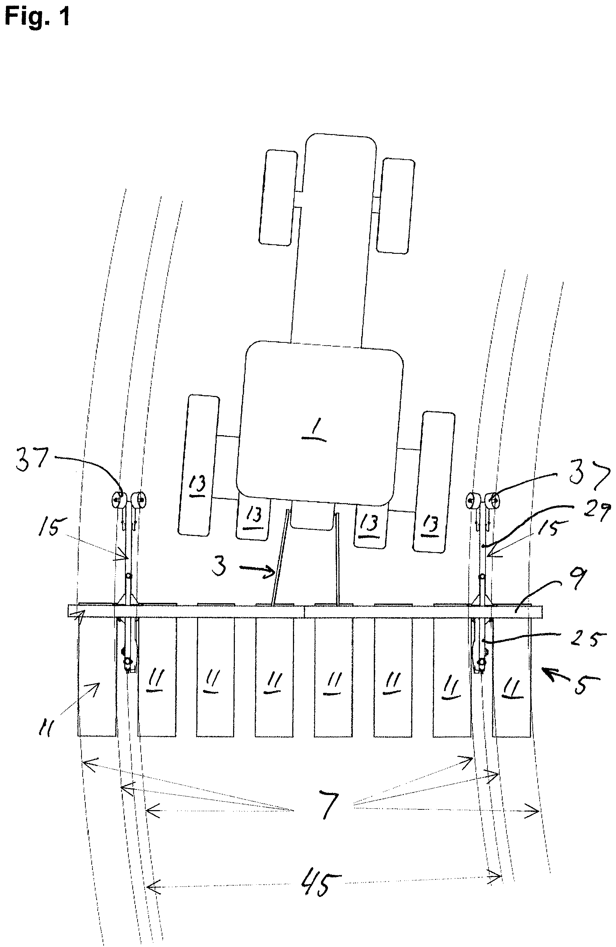

Fig. 1 is a top view of a tractor 1 with a three point hitch 3 to which is coupled an agricultural implement in the form of a weeding implement 5. The tractor 1 and the weeding implement 5 are operating in a field having pre-prepared ridges and furrows between the ridges whereby curves 7 designate transitions between ridges and the bottoms of adjacent furrows. In the embodiment shown the furrows provide tracks for steering the weeding implement 5.

The weeding implement 5 comprises a boom 9 extending transverse to the direction of travel during operation. The boom 9 comprises a coupling device via which the boom is attached to the three point hitch 3 in a manner known per se. The boom 9 is in the present embodiment carrying 8 field working tools in the form of weeding units 11, e.g. such weeding units as disclosed in Danish patent application no. PA 2011 00388, filed by the present inventor, now Danish patent No. 178239.

Each weeding unit 11 is spanning a ridge to abut on opposite sloping sides of the ridge and weed along a row of crop plants situated on the top of the ridge. A field comprising such ridges with crops might be prepared by means of an apparatus as disclosed in WO 2006133697 A1.

The weeding units 11 each has a longitudinal extent in the direction of travel during operation and is attached to the boom 9 to be rotatable, within limits, around a respective vertical axis.

The tractor 1 is equipped with two rear wheels 13 on either side, i.e. four rear wheels 13 in all. The rear wheels on either side of the tractor 1 are spaced to provide for the rear wheels to run in respective furrows between the ridges.

At either end of the boom 9 a steering device 15 is mounted between the two outermost weeding units.

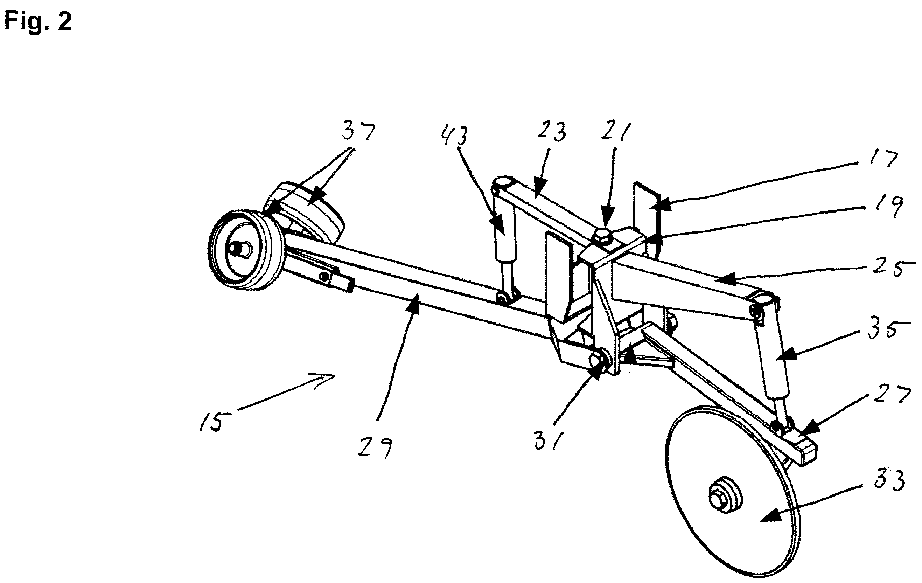

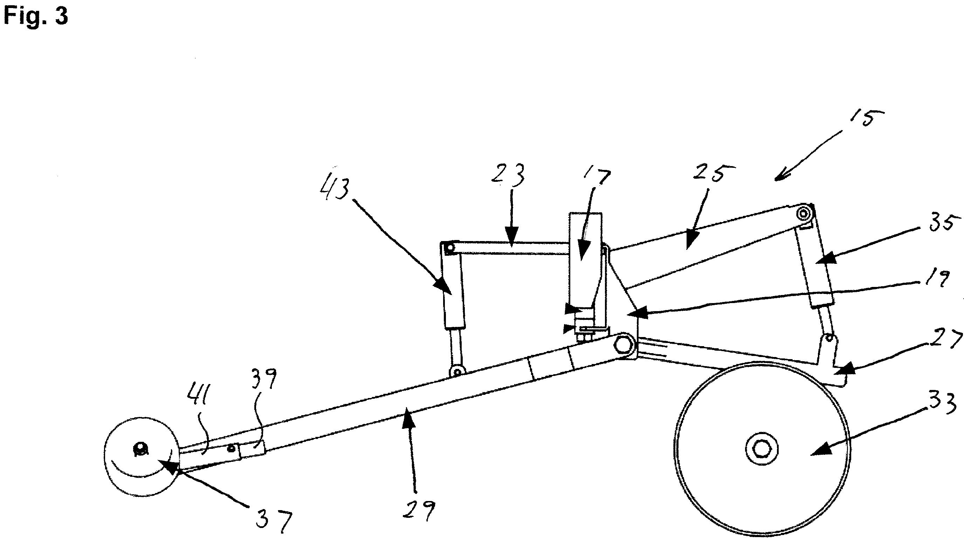

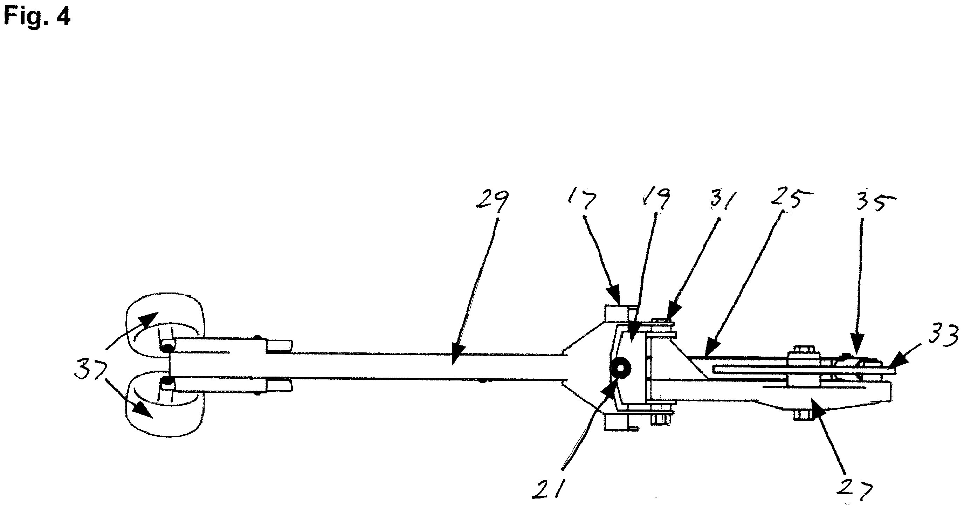

The steering device 15 is shown in more detail in Figs. 2 to 4 and comprises a mounting bracket 17 attached to the boom 9 (not shown in Figs. 2 to 4), a suspension bracket 19 attached to the mounting bracket 17 via a bolt 21 providing for rotation, within limits, of the suspension bracket 19 around a vertical axis. A front support arm 23 and a rear support arm 25 are rigidly connected to the suspension bracket 19 to extend respectively forwards and rearwards in a longitudinal direction. The suspension bracket supports a coulter arm 27 and a steering arm 29, which in the present embodiment are mounted on a common bolt 31 providing separate hinges for the two arms 27, 29 to rotate independently around a horizontal axis perpendicular to the longitudinal direction.

The coulter arm 27 carries a coulter, which in the present embodiment is a rotatable plane disc coulter 33 rotatable around a horizontal axis perpendicular the longitudinal direction. A first hydraulic spring 35 is provided between the rear support arm 25 and the coulter arm 27 to urge the coulter 33 downwards during operation.

The steering arm 29 carries a track following means in the form of a pair of wheels 37 rotatable around mutually slanted axes whereby during operation the pair of wheels are running on a respective sloping side of neighboring ridges thus following the track provided by the furrow between such neighboring ridges. The pair of wheels 37 is mounted on a holder 39 accommodated in a tubular guide 41 with the possibility of adjustment in the longitudinal direction. A second hydraulic spring 43 is provided between the front support arm 23 and the steering arm 29 to urge the pair of wheels 37 downwards during operation.

In operation the implement 5 is used in a field with precisely pre-prepared tracks, such as might e.g. be provided by means of an apparatus as disclosed in WO 2006133697 A1.

The weeding units 11 are spaced to match the spacing of the ridges in the field and lateral positions of the steering devices 15 will match furrows between ridges corresponding to the two outermost weeding units at either end of the boom 9.

The first hydraulic spring 35 provides a spring load that urges the coulter 33 into the ground whereby it obtains a good grip against lateral forces, while permitted to raise to ride over an obstacle such as a stone in the ground without lifting the entire implement 5.

The second hydraulic spring 43 provides a spring load that keeps the pair of wheels 37 in firm contact with the respective sloping ridge sides thereby keeping the pair of wheels 37 constantly on the track.

If the implement 5 tends to diverge from a position perpendicular to the instant course of the track the steering devices 15 will provide lateral tensions tending to keep the implement in the correct position due to the fact that the steering devices 15 are positioned at the ends of the boom 9. The closer to the ends of the boom 9 the steering devices 15 are positioned the more pronounced this effect will be. Accordingly the steering devices are preferably at least positioned in the outermost thirds of the longitudinal extent of the boom and more preferably even closer to the respective ends than that.

Further due to the fact that the steering devices 15 are positioned at the ends of the boom 9 they will affect the tractor 1 on a large moment arm through the three point hitch 3, when the limits of the movability of the three point hitch 3 has been reached, whereby the steering devices 15 will keep the weeding implement 5 including the weeding units 11 on the right track symbolised in Fig. 1 by the curve 45 indicating the track of the coulter 33. Thereby the rear wheels 13 of the tractor 1 may be slightly off-set from the centres of the respective furrows e.g. when driving through a curve in the field.

In the present embodiment the weeding units 11 are aligned along the boom 9 and the steering devices 15 are positioned in the longitudinal direction for the coulters 33 to be aligned with the weeding units 11 thereby the lateral positions of the weeding units 11 will be most precisely controlled by the coulters 33. More specifically the coulters 33 are preferably aligned with the vertical axes of rotation (not shown) of the respective weeding units 11.

In each steering device 15 the centre of the coulter 33 has a first horizontal distance from the vertical axis defined by the bolt 21 and the pair of wheels 37 has a second horizontal distance from said vertical axis defined by the bolt 21. The second horizontal distance is more than twice the length of the first horizontal distance, whereby the lateral forces acting on the pair of wheels 37 are substantially smaller that the lateral forces acting on the coulter 33. Moreover, due to the relative long length of the steering arm 29 and thus of the second horizontal distance the pair of wheels 37 of the two steering devices 15 are positioned substantially in alignment with the rear wheels 13 of the tractor 1 or at least within the overall longitudinal extent of said rear wheels 13. This feature contributes to give the steering devices a very quick response to lateral movements of the rear wheels 13 relative to the tracks provided by the ridges and furrows in the field, thereby contributing to provide for a very good precision of the weeding operation by the weeding units 11, which may therefore be adjusted to weed very close to the crop.

## Claims

1. An agricultural implement (5) for use in a field comprising pre-prepared tracks, such as furrows and/or ridges (7), said implement comprising a tool carrying transverse boom (9) carrying a plurality of field working tools (11), said boom (9) comprising a coupling device for attachment to a load carrying vehicle (1), and a track following steering device (15), said steering device (15) being attached to the boom (9) to be rotatable around a first vertical axis (21), said steering device comprising a coulter (33) extending in a vertical plane and a steering arm (29) extending parallel to said vertical plane to a front end carrying a track following means (37), **characterized in that** at least two such steering devices (15) are attached to said boom (9), whereby at either end of the boom (9) a steering device (15) is provided.

2. An agricultural implement according to claim 1, wherein the coulter (33) is suspended in the steering device (15) to be movable upwards against a spring load (35).

3. An agricultural implement according to claim 2, wherein the coulter (33) is mounted on a coulter arm (27) rotatable around an axis (31) perpendicular to said vertical plane.

4. An agricultural implement according to any one of claims 1 to 3, wherein the steering arm (29) is rotatable around an axis (31) perpendicular to said vertical plane against a spring load (43).

5. An agricultural implement according to any one of claims 1 to 4, wherein the track following means comprises a pair of wheels (37) rotating around mutually slanted axes.

6. An agricultural implement according to any one of claims 1 to 5, wherein the boom (9) has a longitudinal extent and that the steering devices (15) are attached to the boom (9) within the respective outermost third of said longitudinal extent.

7. An agricultural implement according to any one of claims 1 to 6, wherein the steering devices (15) are attached to the boom (9) at the respective end between the two outermost of the field working tools (11).

8. An agricultural implement according to any one of claims 1 to 7, wherein the coulters (33) are aligned with the field working tools (11).

9. An agricultural implement according to any one of claims 1 to 8, wherein the centre of the coulter (33) has a first horizontal distance from the first vertical axis (21), that the track following means (37) has second horizontal distance from the first vertical axis (21), and wherein the second horizontal distance is more than twice as long as the first horizontal distance.

10. An agricultural implement according to claim 9, wherein the steering arm (29) is constructed for the second horizontal distance to be adjustable.

## Patentansprüche

1. Landwirtschaftliches Anbaugerät (5) zur Verwendung auf einem Feld, das vorab vorbereitete Spuren wie Furchen und/oder Kämme (7) umfasst, wobei das Anbaugerät einen werkzeugtragenden Querausleger (9), der eine Vielzahl von Feldarbeitswerkzeugen (11) trägt, wobei der Ausleger (9) eine Koppelvorrichtung zum Anbringen an einem Lasttragefahrzeug (1) umfasst, und eine der Spur folgende Lenkvorrichtung (15) umfasst, wobei die Lenkvorrichtung (15) so an dem Ausleger (9) angebracht ist, dass sie um eine erste vertikale Achse (21) drehbar ist, wobei die Lenkvorrichtung ein sich in einer vertikalen Ebene erstreckendes Pflugmesser (33) und einen Lenkarm (29) umfasst, der sich parallel zu der vertikalen Ebene zu einem vorderen Ende, das ein Spurfolgemittel (37) trägt, erstreckt, **dadurch gekennzeichnet, dass** mindestens zwei derartige Lenkvorrichtungen (15) an dem Ausleger (9) angebracht sind, wodurch eine Lenkvorrichtung (15) an jedem Ende des Auslegers (9) vorgesehen ist.

2. Landwirtschaftliches Anbaugerät nach Anspruch 1, wobei das Pflugmesser (33) in der Lenkvorrichtung (15) aufgehängt ist, um nach oben gegen eine Federbelastung (35) beweglich zu sein.

3. Landwirtschaftliches Anbaugerät nach Anspruch 2, wobei das Pflugmesser (33) an einem Pflugmesserarm (27) montiert ist, der um eine senkrecht zu der vertikalen Ebene verlaufende Achse (31) drehbar ist.

4. Landwirtschaftliches Anbaugerät nach einem der Ansprüche 1 bis 3, wobei der Lenkarm (29) um eine senkrecht zu der vertikalen Ebene verlaufende Achse (31) gegen eine Federbelastung (43) drehbar ist.

5. Landwirtschaftliches Anbaugerät nach einem der Ansprüche 1 bis 4, wobei das Spurfolgemittel ein Paar Räder (37) umfasst, die sich um gegenseitig geneigte Achsen drehen.

6. Landwirtschaftliches Anbaugerät nach einem der Ansprüche 1 bis 5, wobei der Ausleger (9) eine Längserstreckung hat und dass die Lenkvorrichtungen (15) in dem jeweiligen äußersten Drittel der Längserstreckung an dem Ausleger (9) angebracht sind.

7. Landwirtschaftliches Anbaugerät nach einem der Ansprüche 1 bis 6, wobei die Lenkvorrichtungen (15) an dem jeweiligen Ende zwischen den beiden äußersten der Feldarbeitswerkzeuge (11) an dem Ausleger (9) angebracht sind.

8. Landwirtschaftliches Anbaugerät nach einem der Ansprüche 1 bis 7, wobei die Pflugmesser (33) auf die Feldarbeitswerkzeuge (11) ausgerichtet sind.

9. Landwirtschaftliches Anbaugerät nach einem der Ansprüche 1 bis 8, wobei die Mitte des Pflugmessers (33) einen ersten horizontalen Abstand von der ersten vertikalen Achse (21) hat, dass das Spurfolgemittel (37) einen zweiten horizontalen Abstand von der ersten vertikalen Achse (21) hat und wobei der zweite horizontale Abstand mehr als doppelt so lang als der erste horizontale Abstand ist.

10. Landwirtschaftliches Anbaugerät nach Anspruch 9, wobei der Lenkarm (29) so konstruiert ist, dass der zweite horizontale Abstand verstellbar ist.

## Revendications

1. Accessoire agricole (5) destiné à être utilisé dans un champ comprenant des pistes préparées au préalable, telles que des sillons et/ou des crêtes (7), ledit accessoire comprenant une poutre transversale de support d'outils (9) portant une pluralité d'outils de travail de la terre (11), ladite poutre (9) comprenant un dispositif d'accouplement prévu pour être attaché à un véhicule de support de charge (1), et un dispositif de direction suivant une piste (15), ledit dispositif de direction (15) étant attaché à la poutre (9) de manière à pouvoir tourner autour d'un premier axe vertical (21), ledit dispositif de direction comprenant un soc (33) s'étendant dans un plan vertical et un bras de direction (29) s'étendant parallèlement audit plan vertical jusqu'à une extrémité avant portant un moyen suivant la piste (37), **caractérisé en ce qu'**au moins deux dispositifs de direction de ce type (15) sont attachés à ladite poutre (9), un dispositif de direction (15) étant prévu à chaque extrémité de la poutre (9).

2. Accessoire agricole selon la revendication 1, dans lequel le soc (33) est suspendu dans le dispositif de direction (15) de manière à pouvoir être déplacé vers le haut à l'encontre d'une charge de ressort (35).

3. Accessoire agricole selon la revendication 2, dans lequel le soc (33) est monté sur un bras de soc (27) pouvant tourner autour d'un axe (31) perpendiculaire audit plan vertical.

4. Accessoire agricole selon l'une quelconque des revendications 1 à 3, dans lequel le bras de direction (29) peut tourner autour d'un axe (31) perpendiculaire audit plan vertical à l'encontre d'une charge de ressort (43).

5. Accessoire agricole selon l'une quelconque des revendications 1 à 4, dans lequel le moyen suivant la piste comprend une paire de roues (37) tournant autour d'axes inclinés l'un par rapport à l'autre.

6. Accessoire agricole selon l'une quelconque des revendications 1 à 5, dans lequel la poutre (9) présente une étendue longitudinale et en ce que les dispositifs de direction (15) sont attachés à la poutre (9) à l'intérieur du tiers respectif le plus à l'extérieur de ladite étendue longitudinale.

7. Accessoire agricole selon l'une quelconque des revendications 1 à 6, dans lequel les dispositifs de direction (15) sont attachés à la poutre (9) à l'extrémité respective entre les deux outils les plus extérieurs parmi les outils de travail de la terre (11).

8. Accessoire agricole selon l'une quelconque des revendications 1 à 7, dans lequel les socs (33) sont alignés avec les outils de travail de la terre (11).

9. Accessoire agricole selon l'une quelconque des revendications 1 à 8, dans lequel le centre du soc (33) présente une première distance horizontale au premier axe vertical (21), le moyen suivant la piste (37) présente une deuxième distance horizontale au premier axe vertical (21), et dans lequel la deuxième distance horizontale mesure plus du double de la première distance horizontale.

10. Accessoire agricole selon la revendication 9, dans lequel le bras de direction (29) est construit de manière à ce que la deuxième distance horizontale soit ajustable.
